# EUROPÄISCHE PATENTSCHRIFT

(11) **EP 2 235 666 B1**
(45) Veröffentlichungstag und Bekanntmachung des Hinweises auf die Patenterteilung: **18.03.2015**
(21) Anmeldenummer: 09703911.9
(22) Anmeldetag: 16.01.2009
(51) Int. Cl.: G06K 19/07, G06K 19/077, G06K 17/00

(54) **KARTENFÖRMIGER DATENTRÄGER**
CARD-SHAPED DATA CARRIER
SUPPORT DE DONNÉES EN FORME DE CARTE

(30) Priorität: 21.01.2008 DE 102008005320
(43) Veröffentlichungstag der Anmeldung: 06.10.2010
(73) Patentinhaber: Giesecke & Devrient GmbH, 81677 München (DE)
(72) Erfinder: SCHRÖPF, Manuela, 81543 München (DE); GRIESMEIER, Robert, 83052 Heufeldmühle (DE); TARANTINO, Thomas, 83410 Laufen (DE)
(86) Internationale Anmeldenummer: PCT/EP2009/000263
(87) Internationale Veröffentlichungsnummer: WO 2009/092547

(56) Entgegenhaltungen:
- EP-A- 1 515 269
- EP-A- 1 785 916
- DE-A1- 19 614 808

## Beschreibung

Die Erfindung betrifft die Herstellung von kartenförmigen Datenträgern zur Verwendung als Plug-In sowie entsprechende Datenträger.

Unter Plug-Ins versteht man Chipkarten im ID-000 Format. Sie finden hauptsächlich Verwendung als SIM-Karte (SIM = Subscriber Identification Module) im GSM-Bereich (GSM = globales System für mobile Kommunikation). Die Längen- und Breitenabmessungen liegen bei 25 x 15 mm, wobei eine der Ecken des Moduls abgeschrägt ist, um damit die Orientierung der Karte beim Einlegen in den Kartenleser zu vereinfachen.

Üblicherweise wurden Plug-Ins aus einer Karte mit ISO-Format ID-1 mit einer Größe von 54 x 85,6 mm hergestellt. In den Körper dieser Karte wird bei der Herstellung eine Kavität gefräst, in die ein vorgefertigtes Chipkartenmodul eingesetzt wird, welches ISO-Kontaktflächen und einen mit den Kontaktflächen elektrisch leitend kontaktierten Chip umfasst, der zum Schutz gegen Beschädigung mit einem Kunststoff umgossen ist. Aus der ID-1-Karte wird dann das Plug-In herausgestanzt. Alternativ kann die Karte direkt im Plug-In-Format hergestellt werden, beispielsweise in Spritzgusstechnik, und das Chipkartenmodul nachträglich eingebaut werden.

Soweit die Plug-In-Karte nicht aus einer ID-1-Karte hergestellt wird, sind entsprechend angepasste Produktionsanlagen erforderlich, um die Plug-Ins direkt im Fertigformat herzustellen.

Aus der EP 1515 269 A2 ist ein Verfahren zur Herstellung einer Chipkarte im SIM-Format bekannt, nach dem die Karte in Spritzgusstechnik direkt auf einem Trägerband ausgebildet wird. Auf der Oberseite eines Trägerbandes wird dazu ein Kontaktlayout angelegt, auf der Rückseite ein IC-Chip aufgebracht. Über in dem Trägerband vorgesehene Kontaktierungslöcher werden die Kontaktflächen mit dem IC-Chip verbunden. Das so vorbereitete Halbzeug wird in eine Spritzgussform gesetzt, wobei das Kontaktlayout auf der Unterschale aufliegt. Die Spritzgussform besitzt die Außenkontur der fertigen Chipkarte. Die fertigen Spritzgusskörper werden noch im Trägerband getestet und danach ausgestanzt. Das Verfahren eignet sich insbesondere für die Herstellung von Chipkarten, bei denen das Kontaktlayout den größten Teil einer Oberseite einnimmt.

Aus der DE 19614 808 A1 ist ferner ein Verfahren zur Herstellung einer Chipkarte bekannt, nach dem die Karte, um Beschädigungen der Oberflächen zu vermeiden, während des Herstellungs- und Auslieferungsprozesses mit einer entfernbaren Hilfsschicht versehen wird. Die Hilfsschicht wird nach Abschluss des Herstellungs- bzw. Auslieferungsprozesses rückstandsfrei wieder entfernt. Die Hilfsschicht kann so ausgebildet sein, dass durch sie hindurch ein Lasern der obersten Kartenschicht möglich ist.

Der vorliegenden Erfindung liegt die Aufgabe zugrunde, ein Verfahren zur Herstellung eines kartenförmigen Datenträgers unter Einbeziehung des verwendeten Filmträgers anzugeben, das es erlaubt, auf die das Kontaktlayout tragende Seite des Datenträgers Sicherheitsmerkmale aufzubringen.

Diese Aufgabe wird durch ein Herstellungsverfahren mit den Merkmalen des Anspruchs 1 gelöst. In davon abhängigen Ansprüchen sind vorteilhafte Ausgestaltungen und Weiterbildungen des erfindungsgemäßen Verfahrens angegeben. Die Erfindung betrifft aber gleichermaßen die mittels eines solchen Verfahrens herstellbaren Datenträger als solche.

Die Erfindung geht davon aus, daß zunächst ein Filmträger zur Verfügung gestellt wird, an dessen Vorderseite ein Kontaktlayout und an dessen Rückseite Kontaktierungsflächen angelegt sind. Der Filmträger kann auf einer Rolle aufgewickelt oder als Bogenformat bereitgestellt werden. Ein Halbleiterschaltkreis wird auf der Rückseite des Filmträgers angeordnet und die Kontakte des Halbleiterschaltkreises mit den Kontaktierungsflächen verbunden, beispielsweise in der herkömmlichen Wirebond-Technologie oder Flip-Chip-Technologie. Dann wird ein Kartenkörper, dessen Längen- und/ oder Breitenabmessungen den Abmessungen des fertigen Datenträgers entspricht und dessen Dickenabmessung zusammen mit der Dicke des Filmträgers die Dicke des fertigen Datenträgers ergibt, mit der Rückseite des Filmträgers verbunden. Schließlich wird aus dem Filmträger ein zumindest ein Kontaktlayout umfassender Bereich herausgetrennt, der die Längen- und Breitenabmessungen des fertigen Datenträgers besitzt. Alternativ kann das Heraustrennen dieses Bereichs auch vor oder während des Verbindens des Kartenkörpers mit der Rückseite des Filmträgers erfolgen.

Mittels dieses Verfahrens lässt sich in einfacher Weise ein kartenförmiger Datenträger im Plug-In-Format direkt herstellen.

Zum Verbinden des Kartenkörpers mit der Rückseite des Filmträgers bestehen verschiedene Möglichkeiten. Einerseits kann ein vorgefertigter Plug-In-Kartenkörper unter den Filmträger gebracht werden, indem die Kartenkörper beispielsweise auf einem Förderband oder einem Klebeband transportiert werden, und mit geeigneten Verfahren an das Filmträgermaterial angeheftet werden. Dazu kann beispielsweise ein hitzeaktivierbarer Kleber oder ein Flüssigkleber dienen. Auch Ultraschallschweißen ist möglich. Bei dieser Variante erfolgt das Heraustrennen des fertigen Datenträgers aus dem Filmträger erst in einem nachfolgenden Schritt.

Gemäß einer anderen Variante werden die Chipmodule in herkömmlicher Weise auf dem Filmträger hergestellt. Dies kann das Umgießen des Halbleiterschaltkreises mit einer schützenden Vergußmasse umfassen. Es kann aber auch gleich ein fertiges Modulband bereitgestellt werden, auf dem der mit Vergußmasse geschützte Halbleiterschaltkreis bereits vorhanden ist. Die Filmträgerrückseite wird dann mit vorgefertigten Plug-In-Kartenkörpern in Kontakt gebracht und mit diesen beispielsweise durch einen hitzeaktivierbaren Kleber oder ein Flüssigklebersystem verbunden, wobei im gleichen Produktionsschritt der entsprechende Bereich aus dem Filmträger ausgestanzt wird und auf dem Kartenkörper verbleibt. Bei dieser Ausführungsvariante wird der Filmträger bzw. das Modulband vorzugsweise als Rollenware zur Verfügung gestellt, und der Schritt des Heraustrennens aus dem Filmträger erfolgt hier gleichzeitig mit dem Schritt des Verbindens des Kartenkörpers mit der Filmträgerrückseite.

Gemäß einer weiteren Alternative kann der entsprechende Bereich des Filmträgers mit dem Halbleiterschaltkreis in einem ersten Schritt aus dem Filmträger herausgetrennt und erst in einem zweiten Schritt mit einem Kartenkörper verbunden werden, indem der Filmträger in eine Spritzgussform eingelegt und mit Spritzgussmaterial hinterspritzt wird, um einen Kartenkörper an die Filmträgerrückseite anzuformen. Bei dieser Variante erfolgt das Heraustrennen aus dem Filmträger somit vor dem Schritt des Verbindens des Kartenkörpers mit der Filmträgerrückseite. Ein hitzeaktivierbarer Kleber auf der Filmträgerrückseite trägt vorteilhafter Weise zur Erhöhung der Haftung zwischen dem Spritzgießmaterial und dem Filmträger bei.

Gemäß einer weiteren Variante können auf der Filmträgerrückseite Folien aufgeschichtet werden, bis die geforderte Dicke des herzustellenden Plug-Ins erreicht ist. Zumindest die erste Folie besitzt dazu eine Aussparung im Bereich des aufnehmenden, vorzugsweise umgossenen Halbleiterschaltkreises (Chip). Das Folienschichtsystem wird dann laminiert. Dazu kann zwischen dem Filmträger und den Kunststofffolien eine Klebeschicht vorgesehen werden. Zuletzt werden die Plug-Ins dann in dem gewünschten Format aus dem Bogen ausgestanzt.

Gemäß einem besonders bevorzugten Verfahren wird der Kartenkörper jedoch vor dem Schritt des Heraustrennens des das Kontaktlayout umfassenden Bereichs aus dem Filmträger an die Filmträgerrückseite angegossen. Dies kann in einem einfachen Gießverfahren oder durch Anspritzen im Spritzgießverfahren erreicht werden. Im Falle des Anspritzens des Vergussmaterials wird der Filmträger, der von einer Rolle abgerollt werden kann oder als Bogen vorliegen kann, auf der Rückseite mit einer Spritzgießform abgedeckt, welche einen Hohlraum entsprechend den Abmessungen des herzustellenden Kartenkörpers besitzt. In diesen Hohlraum wird dann das Spritzgießmaterial an die Filmträgerrückseite angespritzt. Es können mehrere Kartenkörper in einem Verfahrensschritt an den Filmträger angespritzt werden. Das Heraustrennen der fertigen Datenträger aus dem Filmträger erfolgt frühestens nach dem Aushärten des Vergussmaterials.

Wird der Filmträger als Bogen zur Verfügung gestellt, so bietet sich auch eine andere Art des Aufbringens der Vergußmasse zur Bildung des Kartenkörpers an. Dabei wird zunächst eine Schablone auf die Rückseite des Filmträgers aufgesetzt, wobei die Schablone im Bereich des herzustellenden Kartenkörpers Aussparungen mit den Abmessungen des herzustellenden Kartenkörpers besitzt. Diese Aussparungen werden mit Vergußmasse gefüllt. Nach dem Aushärten der Vergußmasse wird die Schablone entfernt, und anschließend werden die fertigen Datenträger aus dem Filmträger herausgetrennt. Vor dem Aushärten der Vergußmasse kann mittels eines Rakels überschüssige Vergußmasse von der Schablone entfernt werden, um eine glatte Datenträgerrückseite und die gewünschte Datenträgerdicke zu erzielen.

Die vorbeschriebenen Verfahren lassen sich in einfacher Weise mit weiteren Schritten bei der Datenträgerherstellung kombinieren und dadurch weiter optimieren, beispielsweise in Bezug auf das Einbringen von Sicherheitsmerkmalen, Personalisierungsmerkmalen, Individualisierungsmerkmalen und Designmerkmalen, wenn nämlich der Filmträger für sichtbare Strahlung transparent oder semi-transparent ist, so daß durch den Filmträger hindurch das Kartenkörpermaterial sichtbar ist.

So kann beispielsweise auf dem Kartenkörper ein Designdruck vorgesehen werden, der durch den Filmträger hindurch sichtbar ist.

Andererseits ist es möglich, in dem Material des Kartenkörpers Farbpigmente, Glitzerelemente, Lumineszenzstoffe oder andere optische Sicherheitselemente vorzusehen, welche durch den Filmträger hindurch sichtbar sind. Sofern der Kartenkörper mittels einer Vergußmasse gebildet wird, können diese Stoffe und Elemente dem Material der Vergußmasse problemlos beigemischt werden.

Als Material für den Kartenkörper, insbesondere als Vergußmasse, kann vorteilhaft ein Material gewählt werden, welches für die Beschriftung mittels einer Laserstrahlung sensibilisiert ist. Für diese Strahlung ist der Filmträger vorzugsweise transparent. Dann kann der Kartenkörper durch den Filmträger hindurch mittels der Laserstrahlung markiert werden, wobei die Markierung vorzugsweise angrenzend an den Filmträger erzeugt wird, je nach Fokussierung des Laserstrahls aber auch im Kartenkörperinneren liegen kann (in diesem Falle muss das Kartenkörpermaterial für sichtbare Strahlung transparent sein, um die Markierung von außen erkennen zu können). Es ist auch möglich, daß der Filmträger einen Teil der Laserstrahlung selbst absorbiert, so daß eine Markierung sowohl im Filmträger als auch im Kartenkörper entsteht.

Weiter vorteilhaft kann der Filmträger zumindest auf der Rückseite eine Metallbeschichtung aufweisen oder mit einer solchen Beschichtung versehen werden und mit der Laserstrahlung durch den Filmträger hindurch eine sichtbare Markierung in der Metallschicht erzeugt werden. Wenn sowohl die Vergußmasse als auch die Metallschicht mittels Laserstrahlung markiert werden soll, wobei dafür Laserstrahlung mit unterschiedlicher Wellenlänge eingesetzt werden kann, ist es vorteilhaft, die Metallbeschichtung nur bereichsweise aufzubringen, so daß sowohl die Vergußmasse als auch die Metallbeschichtung in von außen sichtbarer Weise lasermarkierbar ist.

Die Lasermarkierung wird vorteilhafter Weise dazu genutzt, den Datenträger zu individualisieren, beispielsweise mit einer Seriennummer zu versehen, und/ oder zu personalisieren, also beispielsweise mit personenbezogenen Daten zu versehen.

Zum Heraustrennen eines Bereichs oder eines fertigen Datenträgers aus dem Filmträger kann ein Ziehmesser, Laserstrahl oder Wasserstrahl eingesetzt werden. Das Heraustrennen kann auch durch Stanzung erfolgen. Sofern der Filmträger von einer Rolle abgewickelt wird, erfolgt das Heraustrennen aus dem Filmträger vorteilhafter Weise mittels eines Bandmessers. Das heißt, auf einer Trommel, die entsprechend der Abwickelgeschwindigkeit des Filmträgers rotiert, befindet sich ein Messer, welches die Breiten- und Längenabmessungen des fertigen Datenträgers besitzt. Dieses Bandmesser taucht dann bevorzugt in die Vorderseite des Filmträgers ein und schneidet den gewünschten Bereich im Plug-In-Format heraus. Auf der Rückseite kann auf einer zweiten Trommel ein weiteres Bandmesser vorhanden sein, welches mit dem Bandmesser auf der ersten Trommel kooperiert. Dieses zweite Bandmesser kann für einen auf der Rückseite des Filmträgers befindlichen Kartenkörper eine zentrierende Funktion haben, wodurch die Fertigungsgenauigkeit verbessert wird.

Nachfolgend wird die Erfindung beispielhaft anhand der begleitenden Zeichnungen beschrieben. Darin zeigen:
- Figur 1: in Draufsicht einen Ausschnitt eines Filmträgers mit Kontaktlayout als Rollenware,
- Figur 2a: einen kartenförmigen Datenträger gemäß einem ersten Ausführungsbeispiel,
- Figur 2b: einen kartenförmigen Datenträger gemäß einem zweiten Ausführungsbeispiel,
- Figur 2c: einen kartenförmigen Datenträger gemäß einem dritten Ausführungsbeispiel,
- Figur 3: schematisch den Herstellungsprozeß eines kartenförmigen Datenträgers ausgehend von einem als Rollenware vorliegenden Filmträger,
- Figur 4: ein Ausführungsbeispiel zum Verbinden eines Kartenkörpers mit einem Filmträger durch Gießen,
- Figur 5: den Vorgang des Laserbeschriftens eines Kartenkörpers durch den Filmträger hindurch,
- Figur 6: den Vorgang des Heraustrennens eines kartenförmigen Datenträgers aus dem Filmträger mittels eines Bandmessers,
- Figur 7a: schematisch ein erstes Herstellungsverfahren ausgehend von einem Filmträger mit zweireihig angeordnetem Kontaktlayout,
- Figur 7b: schematisch ein zweites und ein drittes Herstellungsverfahren ausgehend von einem Filmträger mit zweireihig angeordnetem Kontaktlayout,
- Figur 8: den Vorgang des Verbindens eines vorgefertigten Kartenkörpers mit dem Filmträger,
- Figur 9: einen bogenförmigen Filmträger mit mehreren Kontaktlayouts,
- Figur 10: die Herstellung eines Kartenkörpers auf dem Filmträger durch Gießen.

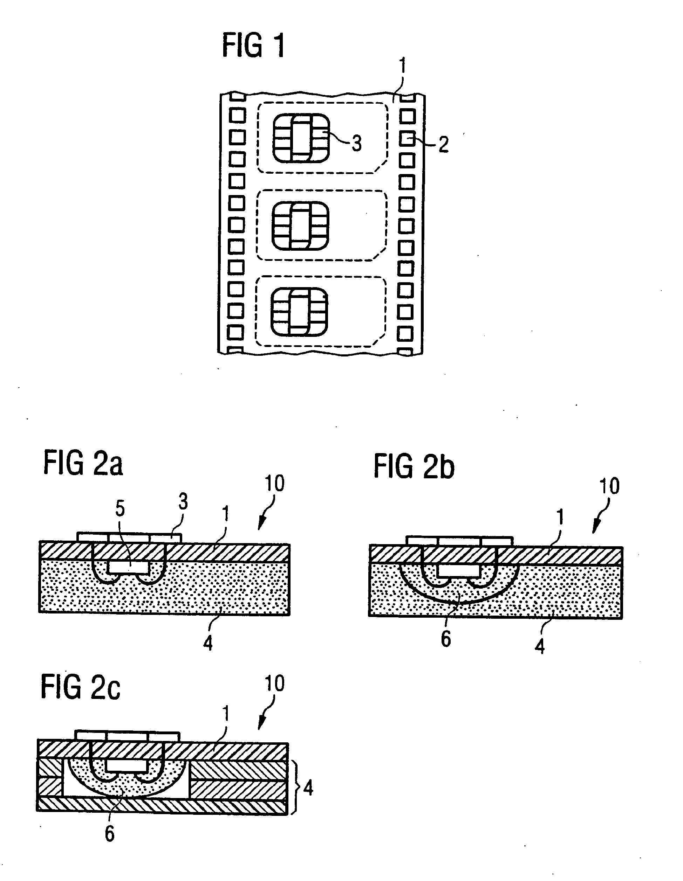

Figur 1 zeigt schematisch in Draufsicht einen Filmträger 1 in Form eines sogenannten Endlos-Trägerbands. An beiden Seiten des Filmträgers sind in herkömmlicher Weise Transportlöcher 2 vorgesehen. Auf der hier in Draufsicht zu sehenden Vorderseite des Filmträgers 1 ist eine Reihe von Kontaktlayouts 3, beispielsweise als Goldbeschichtung, zu erkennen. Im Gegensatz zu herkömmlichen Trägerbändern weist das Trägerband des hier dargestellten Filmträgers 1 statt zwei Reihen nur eine Reihe von Kontaktlayouts 3 auf. Der Bereich, in dem normalerweise die zweite Reihe von Kontaktlayouts 3 vorgesehen ist, wird im weiteren Herstellungsprozeß von dem mit dem Filmträger 1 herzustellenden kartenförmigen Datenträger überdeckt und ist daher freizuhalten. Die Kontur des herzustellenden kartenförmigen Datenträgers ist in Figur 1 durch eine strichlinierte Umrißlinie angedeutet.

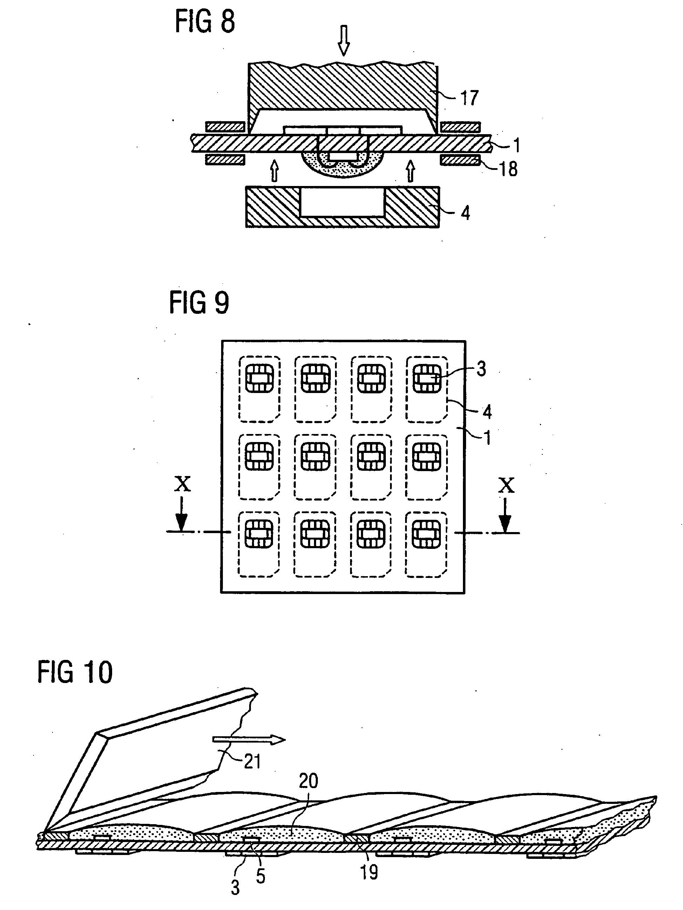

Figur 2a zeigt schematisch im Querschnitt einen kartenförmigen Datenträger 10, wie er mit dem Filmträger 1 gemäß Figur 1 (aber genauso auch aus einem bogenförmigen Filmträger gemäß Figur 9) hergestellt werden kann. Der unmittelbar an den Filmträger 1 angrenzende Kartenkörper 4 ist hier durch eine ausgehärtete Vergußmasse 4 gebildet, welche einerseits einen Halbleiterschaltkreis bzw. Chip 5 schützend umgibt und andererseits zusammen mit dem Filmträger 1 die Abmessungen des fertigen Datenträgers 10 definiert. Bei dem Ausführungsbeispiel gemäß Figur 2a ist der Chip 5 in der Wirebond-Technik mit Kontaktierungsflächen auf der Filmträgerrückseite verbunden, die wiederum mit dem Kontaktlayout elektrisch leitend verbunden sind. Anstelle der Wirebond-Technik kann der Halbleiterschaltkreis ebenso beispielsweise in Flipchip-Technik montiert sein.

Figur 2b zeigt eine zu Figur 2a etwas abgewandelte Ausführung. Hier ist der Chip 5 zunächst mit einer herkömmlichen Vergußmasse 6 knapp umgossen. Erst in einem nachfolgenden Produktionsschritt wurde dann mit einer kostengünstigeren Vergußmasse der Kartenkörper 4 auf Plug-In-Größe gebracht.

Figur 2c zeigt einen ähnlichen Datenträger 10 wie Figur 2b. Hier ist der Kartenkörper 4 jedoch nicht durch eine Vergußmasse sondern durch einen Schichtverbund gebildet, der hier konkret aus drei Schichten besteht, zwei mittleren Schichten mit einer Aussparung für den in der Vergußmasse 6 vergossenen Chip 5 und einer außen liegenden Deckschicht. Es können auch mehr oder weniger Schichten zur Bildung des mehrschichtigen Kartenkörpers Verwendung finden. Zwischen dem Filmträger 1 und der daran angrenzenden Kartenkörperschicht sowie zwischen den einzelnen Kartenkörperschichten können Klebeschichten vorgesehen sein, die das Laminieren des Schichtverbunds unterstützen.

Der Filmträger 1 ist in allen Fällen vorzugsweise für sichtbare Strahlung transparent oder zumindest semi-transparent, so daß durch den Filmträger hindurch der Kartenkörper 4 sichtbar ist. Dann kann auf dem Kartenkörper vorteilhafter Weise ein von außen sichtbarer, aber durch den Filmträger 1 geschützter Designdruck vorgesehen werden. Falls der Kartenkörper 4 durch eine Vergußmasse gebildet wird, wie in dem Ausführungsbeispiel gemäß Figuren 2a und 2b, können in die Vergußmasse Pigmente, Elemente oder andere Stoffe eingemischt werden, beispielsweise Farbpigmente, Glitzerelemente, Lumineszenzstoffe oder andere optische Sicherheitselemente, die dann durch den Filmträger hindurch sichtbar sind.

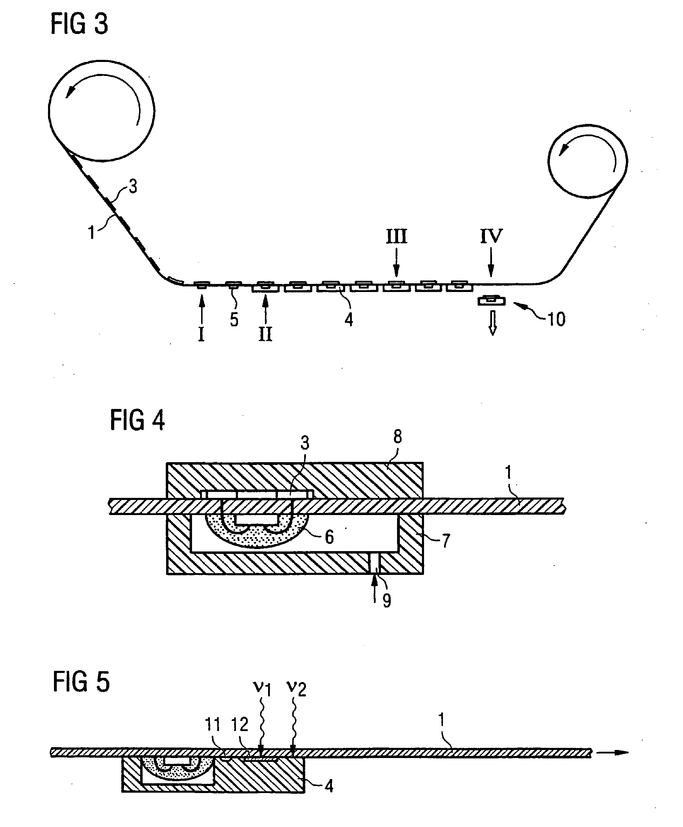

Figur 3 zeigt schematisch den Verfahrensablauf zur Herstellung kartenförmiger Datenträger 10 im gewünschten Endformat, insbesondere also im ID-000-Format, ausgehend von einem von einer Rolle abgewickelten Filmträger 1. Zunächst weist der Filmträger 1 lediglich auf seiner Vorderseite eine Reihe von Kontaktlayouts 3 auf. Auf der Rückseite des Filmträgers wird zu jedem Kontaktlayout ein Halbleiterschaltkreis 5 angeordnet und mit auf der Filmträgerrückseite vorgesehenen, hier nicht dargestellten, Kontaktierungsflächen elektrisch leitend verbunden, die ihrerseits mit dem Kontaktlayout auf der Filmträgervorderseite elektrisch leitend verbunden sind. Diese Prozeßstation ist in Figur 3 schematisch mit I bezeichnet. Er kann bedarfsweise entfallen, wenn der Filmträger 1 als fertiges Modulband bereitgestellt wird, welches auf der Filmträgerrückseite bereits den durch Vergußmasse geschützten Chip 5 trägt.

In der nächsten Station II wird dann der Kartenkörper 4 mit der Rückseite des Filmträgers 1 verbunden. Darauf kann eine weitere Station III folgen, in der der Filmträger 1 und/oder der Kartenkörper 4 markiert oder beschriftet werden. Beispielsweise kann der Kartenkörper auf der Kartenkörperrückseite oder auf den Kartenkörperseitenflächen bedruckt werden, etwa im Tampondruck. Alternativ oder zusätzlich kann hier eine Lasermarkierung oder Laserbeschriftung durchgeführt werden. Auch ist es möglich, ein Label in eine Vertiefung des Kartenkörpers einzubringen. Alle vorgenannten Maßnahmen werden vorzugsweise vorgenommen, bevor der kartenförmige Datenträger 10 aus dem Filmträger 1 herausgetrennt wird. Diese Maßnahmen sind aber auch noch am endgültigen, aus dem Filmträger 1 herausgetrennten Datenträger durchführbar. Letztendlich wird bei dem in Figur 3 dargestellten Verfahren ein fertiger kartenförmiger Datenträger 10 in einer weiteren Station IV aus dem Filmträger 1 herausgetrennt.

Figur 4 zeigt ein Beispiel zum Verbinden eines Kartenkörpers 4 mit dem Filmträger 1, wie es in der Station II durchgeführt werden könnte. Dabei wird eine Spritzgußform 7, deren innere Abmessungen den äußeren Abmessungen des herzustellenden Kartenkörpers 4 entspricht, an entsprechender Stelle auf die Rückseite des Filmträgers 1 aufgesetzt. Ein Gegenhalter 8 sorgt von der Vorderseite des Filmträgers 1 aus für den notwendigen Gegendruck. (Es sei angemerkt, daß die Dicke des Kontaktlayouts hier wie auch in allen anderen Darstellungen der Anschaulichkeit halber völlig übertrieben dargestellt ist und realistischer Weise vernachlässigt werden kann.) Durch zumindest eine Öffnung 9 wird eine Vergußmasse in die Kavität der Spritzgußform 7 eingespritzt und füllt die Kavität vollkommen aus. Die Vergußmasse umschließt den Chip, der im dargestellten Ausführungsbeispiel bereits durch eine Vergußpille aus einem ersten Vergußmaterial geschützt ist. Auf diese Vergußpille kann aber verzichtet werden (siehe Figur 2a), insbesondere wenn der Halbleiterschaltkreis in Flipchip-Technik auf dem Filmträger 1 montiert ist. Nach dem Aushärten der eingespritzten Vergußmasse kann die Spritzgießform geöffnet und der Filmträger 1 weitergetaktet werden.

In Figur 5 ist ein Beispiel für eine Bearbeitungsstation III dargestellt. Der Kartenkörper 4 ist im dargestellten Ausführungsbeispiel nicht gegossen, sondern besteht aus einem vorgefertigten Modul oder ist mehrschichtig aufgebaut, wie in Figur 2c gezeigt. Der Filmträger 1 ist transparent oder semi-transparent, so daß ein hier lediglich angedeuteter Aufdruck 11 auf der an den Filmträger 1 angrenzenden Vorderseite des Kartenkörpers 4 durch den Filmträger 1 hindurch sichtbar ist. Darüber hinaus ist auf der genannten Vorderseite des Kartenkörpers 4 eine Metallbeschichtung 12 vorgesehen. Diese Metallschicht wird mittels Laserstrahlung einer ersten Wellenlänge durch den Filmträger 1 hindurch markiert bzw. beschriftet. Für diese erste Strahlung ist der Filmträger 1 zumindest im wesentlichen durchlässig. Neben der Metallschicht 12 wird der Kartenkörper 4 durch den Filmträger 1 hindurch mittels einer zweiten Laserstrahlung, deren Wellenlänge hier unterschiedlich ist zur Wellenlänge der ersten Laserstrahlung, ebenfalls markiert bzw. beschriftet. Zu diesem Zweck wird als Material für den Kartenkörper 4 ein entsprechend lasersensibles Material gewählt oder das Kartenkörpermaterial wird durch entsprechende Zusätze derart sensibilisiert, daß es die betreffende Laserstrahlung absorbiert. Das Material des Filmträgers 1 muß dementsprechend so gewählt werden, daß es für diese Laserstrahlung gerade nicht absorbierend ist oder zumindest eine ausreichende Menge der Laserstrahlung für die Markierung des Kartenkörpers 4 durchläßt. Die Lasermarkierung dient vorzugsweise zur Beschriftung des Datenträgers mit Individualisierungsdaten oder Personalisierungsdaten. Die Beschriftung kann alternativ auch noch nach dem Heraustrennen des kartenförmigen Datenträgers aus dem Filmträger vorgenommen werden.

Falls der Kartenkörper 4 durch Vergußmasse hergestellt worden ist, die an den Filmträger 1 angegossen oder angespritzt wurde, kann die Metallschicht 12 auf dem Filmträger 1 vorgesehen sein. Das heißt, entweder wird der Filmträger 1 mit einer solchen Metallschicht von vornherein zur Verfügung gestellt oder die Metallschicht wird in einem Zwischenschritt auf diesem erzeugt. Eine weitere Metallschicht kann auch auf der Vorderseite des Filmträgers 1 vorgesehen werden. Darüber hinaus ist es möglich, den Filmträger 1 und/oder den Kartenkörper 4 mit einem Designdruck zu versehen oder ein Label in eine hier nicht dargestellte Vertiefung des Kartenkörpers 4 einzubringen.

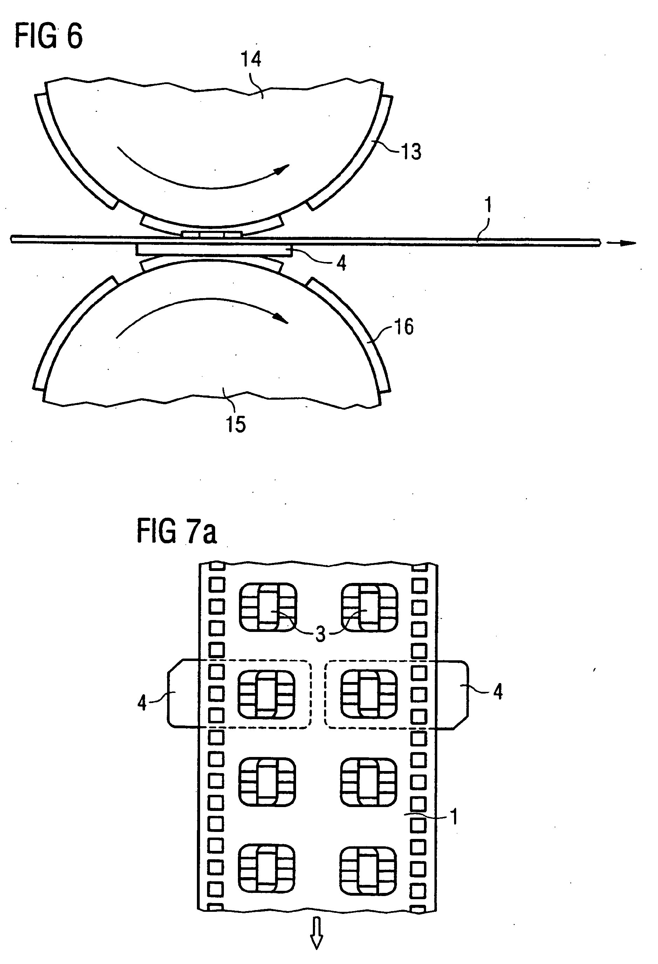

Figur 6 zeigt eine bevorzugte Variante, wie der fertige Datenträger aus dem Filmträger 1 herausgetrennt werden kann. Dazu dient hier ein Bandmesser 13 mit der Umrißform des herauszutrennenden Datenträgers. Mehrere solcher Bandmesser sind auf dem Umfang einer rotierenden Trommel 14 gleichmäßig verteilt angeordnet. Die Trommel 14 rotiert mit einer an die Transportgeschwindigkeit des Filmträgers 1 angepaßten Rotationsgeschwindigkeit. Dabei taucht das Bandmesser in den Filmträger 1 ein und durchtrennt diesen. Auf der Rückseite des Filmträgers 1 läuft gegenüber der Trommel 14 eine Trommel 15, die den zum Heraustrennen notwendigen Gegendruck liefert. Auf dem Umfang der Trommel 15 sind ebenfalls Bandmesser 16 vorgesehen, die mit den Bandmessern 13 der Trommel 14 beim Heraustrennen der kartenförmigen Datenträger aus dem Filmträger 1 zusammenwirken, wobei die Bandmesser 16 auf der zweiten Trommel 15 eine in Figur 6 deutlich erkennbare zentrierende Funktion auf den auszustanzenden Datenträger relativ zu den Bandmessern 13 der ersten Trommel 14 ausüben. Auf die Bandmesser 16 kann jedoch auch verzichtet werden.

Anstelle eines Bandmessers kann zum Heraustrennen der Kartenkörper aus dem Filmträger 1 auch ein einfaches Ziehmesser eingesetzt werden. Auch das Heraustrennen mittels eines Laserstrahls oder eines Wasserstrahls ist möglich.

Figur 7a zeigt eine Variante zu den zuvor beschriebenen Herstellungsverfahren. Bei dieser Variante dient als Ausgangsmaterial ein Filmträger 1, der in herkömmlicher Weise zwei Reihen von Kontaktlayouts 3 umfaßt oder der bereits als zweireihiges Modulband vorliegt. Hier wird unter jedes Kontaktlayout 3 bzw. unter jedes Modul des Filmträgers 1 ein vorgefertigter Kartenkörper 4 gebracht, und es wird in einem einzigen Produktionsschritt das Chipmodul aus dem Filmträger 1 herausgestanzt und in eine vorgefertigte Kavität (nicht gezeigt) des Kartenkörpers 4 eingebracht. Dabei ragt der Kartenkörper seitlich über den Filmträger 1 heraus. Dies ermöglicht es, gleichzeitig zwei nebeneinanderliegende Chipmodule aus dem Filmträger 1 auszustanzen und in die Kartenkörper 4 zu übertragen, die sich zu diesem Zweck in einem 90°-Winkel zur Laufrichtung des Trägerbands befinden. Die Fixierung des ausgestanzten Chipmoduls in der Kavität des Kartenkörpers 4 erfolgt beispielsweise durch hitzeaktivierbare Kleber oder Flüssigklebersysteme.

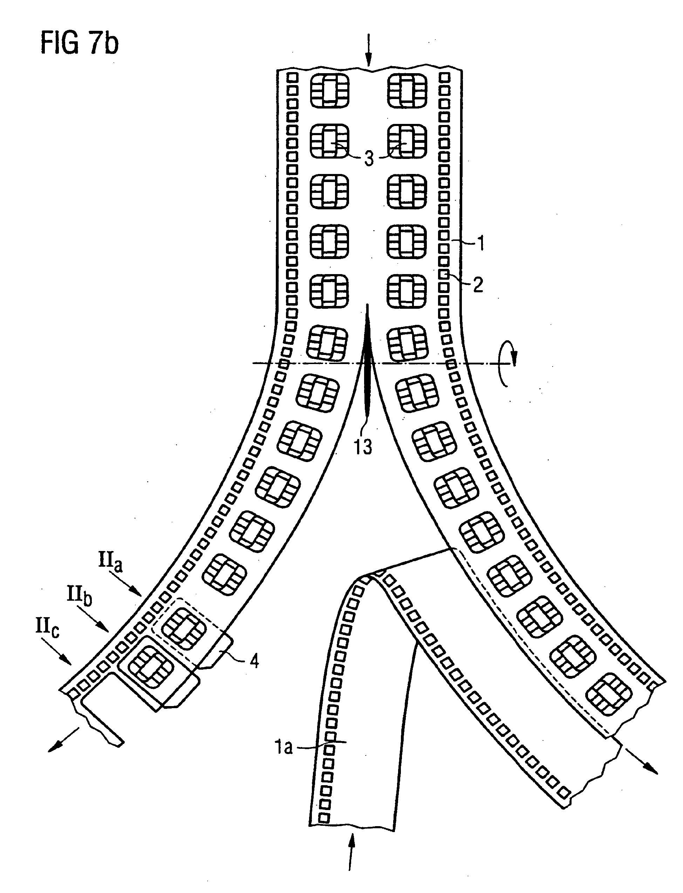

Figur 7b zeigt eine demgegenüber abgewandelte Ausführungsform in zwei Varianten. Gemäß dieser abgewandelten Ausführungsform wird der zweireihige Filmträger 1 bzw. das zweireihige Modulband, welches standardmäßig etwa 35 mm breit ist, entlang der Mittenlängsachse durchtrennt, beispielsweise mittels eines rotierenden Messers 13. Anschließend wird der Filmträger 1 einspurig weiterverarbeitet. Dazu kann entsprechend den Erläuterungen zur Figur 7a jeweils ein Chipmodul aus dem Filmträger 1 ausgestanzt und im selben Moment in eine Kavität eines darunter angeordneten, vorgefertigten Kartenkörpers 4 eingesetzt werden. Oder, wie im linken Teil der Figur 7b gezeigt, wird nicht nur das Chipmodul sondern ein über die Abmessungen des Chipmoduls hinausgehender Bereich des Filmträgers 1 ausgestanzt und mit dem darunter liegenden Kartenkörper 4 verbunden. Dieser ausgestanzte Bereich des Filmträgers 1 entspricht, soweit möglich, der Umfangskontur des darunter liegenden Kartenkörpers 4. Der Schritt des Anordnens des Kartenkörpers 4 unter dem Filmträger 1, des Durchtrennens des Filmträgers 1 entlang der Umfangskontur und des Übertragens auf den Kartenkörper 4 ist in Figur 7b der Anschaulichkeit halber in drei Teilschritten IIa, IIb und IIc an unterschiedlichen Orten dargestellt, findet tatsächlich aber an ein und demselben Ort statt.

Anstatt in den Ausführungsbeispielen gemäß Figur 7a und 7b (linke Variante) das Chipmodul aus dem Filmträger 1 auszustanzen und in den Kartenkörper 4 einzusetzen, kann der Kartenkörper 4 auch zunächst mit der Rückseite des Filmträgers 1 verbunden werden, beispielsweise durch Kleben, und anschließend der gesamte Datenträger aus dem Filmträger 1 ausgestanzt werden. Dabei kann der Kartenkörper 4, wie bereits beschrieben, mehrschichtig auf der Rückseite des Filmträgers 1 aufgebaut werden. Prinzipiell ist es auch denkbar, wenn auch Prozeßtechnisch komplizierter, den Kartenkörper 4 in den Ausführungsbeispielen gemäß Figuren 7a und 7b (linke Variante) an den Filmträger anzuspritzen.

Einfacher ist die Handhabung des geteilten Trägerfilms bei der in Figur 7b rechts dargestellten Variante, bei der der einspurige Filmträger 1 mit einem Hilfsträgerband 1a so ergänzt wird, daß die übliche Breite von 35 mm wieder erreicht wird. Dadurch können wieder Standardmaschinen zur Verarbeitung des Filmträgers 1 bzw. des Chipmodulträgerbandes verwendet werden.

Figur 8 zeigt den Vorgang, wie ein vorgefertigter Kartenkörper 4 an die Rückseite des Filmträgers 1 angesetzt wird, beispielsweise mittels eines Klebers, und im gleichen Verfahrensschritt mittels eines Stanzstempels 17 ein Bereich des Filmträgers 1 mit einer dem Kartenkörper 4 entsprechenden Umfangskontur aus dem Filmträger 1 herausgestanzt wird. Eine Matrize 18 hilft bei der Positionierung des Kartenkörpers 4 relativ zum Stanzstempel 17. Falls nur das Chipmodul aus dem Filmträger 1 ausgestanzt und in einen darunter angeordneten Kartenkörper 4 eingesetzt werden soll, wie in Bezug auf Figur 7a beschrieben, kann anstelle des in Figur 8 gezeigten Stanzstempels 17 ein Stanzherzstempel eingesetzt werden.

Anstatt bei der Herstellung des kartenförmigen Datenträgers von einem bandförmigen Filmträger auszugehen, kann der Filmträger auch im Bogenformat vorliegen und zumindest eine Anzahl gleichmäßig angeordneter Halbleiterschaltkreise 3 oder bereits vollständige Chipmodule aufweisen, wie in Figur 9 gezeigt. Der Abstand zwischen den Halbleiterschaltkreisen 3 bzw. Chipmodulen ist so groß gewählt, daß aus dem Filmträger 1 eine entsprechende Anzahl von Bereichen mit den Längen- und Breitenabmessungen des herzustellenden Datenträgers, insbesondere mit ID-000-Abmessung, herausgetrennt werden können, ohne dabei mit anderen Halbleiterschaltkreisen 3 bzw. Chipmodulen in Konflikt zu kommen. Die Kartenkörper 4 können wiederum auf der Rückseite des bogenförmigen Filmträgers 1 als vorgefertigtes Modul aufgesetzt und verklebt werden, mehrschichtig aufgebaut werden oder als Gußkörper durch einfaches Vergießen oder durch Spritzgießen erzeugt werden, wobei das Heraustrennen des fertigen Datenträgers aus dem Filmträger 1 vorzugsweise in einem letzten Schritt erfolgt.

Anhand der schematischen Figur 10 wird nun erläutert, wie der Kartenkörper 4 in einfacher Weise an die Rückseite des Filmträgers 1 angegossen werden kann. Dazu wird auf die Rückseite des bogenförmigen Filmträgers 1 eine Schablone 19 aufgelegt, welche Aussparungen mit den Längen- und Breitenabmessungen des herzustellenden Datenträgers besitzt. Darüber hinaus ist die Dicke der Schablone 19 so gewählt, daß sie zusammen mit der Dicke des Filmträgers 1 der Gesamtdicke des herzustellenden Datenträgers entspricht. Die Aussparungen werden anschließend mit einer Vergußmasse 20 gefüllt, die auch den hier als Flipchip montierten Halbleiterschaltkreis 5 umgibt. Überschüssiges Vergußmaterial 20 wird mittels eines Rakels 21 abgezogen. Die Flanken der Schablone werden vorzugsweise mit einem Material beschichtet, das keine Verbindung mit der Vergußmasse 20 eingeht, um das spätere Entformen zu erleichtern.

## Patentansprüche

1. Verfahren zur Herstellung eines kartenförmigen Datenträgers (10), insbesondere zur Verwendung als Plug-In, mit den Schritten:
- Bereitstellen eines Filmträgers (1), an dessen Vorderseite ein Kontaktlayout (3) und an dessen Rückseite Kontaktierungsflächen angelegt sind,
- soweit ein Halbleiterschaltkreis noch nicht vorhanden ist, Anordnen eines Halbleiterschaltkreises (5) auf der Rückseite und Verbinden der Kontakte des Halbleiterschaltkreises (5) mit den Kontaktflächen,
- Verbinden eines Kartenkörpers, dessen Längen- und Breitenabmessungen den Abmessungen des fertigen Datenträgers und dessen Dickenabmessung zusammen mit der Dicke des Filmträgers (1) der Dicke des fertigen Datenträgers entspricht, mit der Rückseite des Filmträgers (1) und
- Heraustrennen eines zumindest ein Kontaktlayout (3) umfassenden Bereichs aus dem Filmträger (1) mit Längen- und/oder Breitenabmessungen des fertigen Datenträgers,
**dadurch gekennzeichnet, daß**
der Filmträger (1) für sichtbare Strahlung transparent oder semi-transparent ist, so daß der Kartenkörper (4) durch den Filmträger (1) hindurch sichtbar ist, wobei als Material für den Kartenkörper (4) ein Material gewählt wird, das zur Beschriftung mittels einer Laserstrahlung sensibilisiert ist, für welche der Filmträger (1) vorzugsweise transparent ist.

2. Verfahren nach Anspruch 1, **dadurch gekennzeichnet, daß** der Schritt des Verbindens des Kartenkörpers mit der Rückseite des Filmträgers (1) vor dem Schritt des Heraustrennens erfolgt und das Aufbringen einer den Halbleiterschaltkreis (5) umschließenden Vergußmasse auf der Rückseite des Filmträgers (1) derart umfasst, daß die Vergußmasse den Kartenkörper (4) bildet.

3. Verfahren nach Anspruch 1, **dadurch gekennzeichnet, daß** dasVerbinden des Kartenkörper mit der Rückseite des Filmträgers (1) während oder nach dem Schritt des Heraustrennens aus dem Filmträger (1) erfolgt.

4. Verfahren nach Anspruch 1, umfassend den weiteren Schritt des Erzeugens von sichtbaren Markierungen in dem Kartenkörper (4) mittels Laserstrahlung durch den Filmträger (1) hindurch.

5. Verfahren nach Anspruch 4, umfassend den weiteren Schritt des zumindest bereichsweise Aufbringens einer Metallbeschichtung (12) zumindest auf der Rückseite des Filmträgers (1), sofern auf der Rückseite des Filmträgers (1) eine Metallbeschichtung nicht bereits vorhanden ist, und Erzeugen von sichtbaren Markierungen in der Metallschicht (12) mittels Laserstrahlung durch den Filmträger (1) hindurch.

6. Verfahren nach Anspruch 4 oder 5, umfassend den Schritt des Individualisierens und/oder Personalisierens des Datenträgers (10) durch das Erzeugen der sichtbaren Markierungen.

7. Verfahren nach einem der Ansprüche 1 bis 6, **dadurch gekennzeichnet, daß** als Material für den Kartenkörper (4) ein Material, insbesondere ein Vergussmaterial, gewählt wird, in das visuell erkennbare Farbpigmente, Glitzerelemente, Lumineszenzstoffe oder andere optische Sicherheitselemente eingemischt sind, welche vorzugsweise durch den Filmträger (1) hindurch sichtbar sind.

8. Verfahren nach einem der Ansprüche 1 bis 7, **gekennzeichnet durch** den weiteren Schritt des Bedruckens des Kartenkörpers (4) auf seiner Rückseite und/ oder auf zumindest einer seiner Seitenflächen.

9. Verfahren nach einem der Ansprüche 1 bis 8, **gekennzeichnet durch** den weiteren Schritt des Applizierens eines Labels in einer Vertiefung auf der Rückseite des Kartenkörpers (4).

10. Verfahren nach einem der Ansprüche 1 bis 9, **dadurch gekennzeichnet, daß** der Schritt des Heraustrennens aus dem Filmträger (1) mittels eines Ziehmessers, Laserstrahls oder Wasserstrahls oder durch Stanzen erfolgt.

11. Verfahren nach einem der Ansprüche 1 bis 9, **dadurch gekennzeichnet, daß** der Filmträger (1) von einer Rolle abgewickelt wird und das Heraustrennen aus dem Filmträger mittels eines Bandmessers (13) erfolgt, welches sich auf einer Trommel (14) befindet, die entsprechend der Abwickelgeschwindigkeit des Filmträgers (1) rotiert, und welches die Breiten- und Längenabmessungen des fertigen Datenträgers (10) besitzt.

12. Verfahren nach Anspruch 11, **dadurch gekennzeichnet, daß** auf beiden Seiten des Filmträgers (1) ein Bandmesser (13,16) vorhanden ist, die beim Schritt des Heraustrennens miteinander kooperieren.

13. Verfahren nach einem der Ansprüche 1 bis 12, **dadurch gekennzeichnet, daß** der Kartenkörper (4) an den Filmträger (1) angespritzt wird.

14. Verfahren nach einem der Ansprüche 1 bis 10, **dadurch gekennzeichnet, daß** der Filmträger als Bogen zur Verfügung gestellt wird, wobei der Schritt des Aufbringens der Vergußmasse die folgenden Teilschritte umfasst:
- Aufsetzen einer Schablone (19) auf der Rückseite des Filmträgers (1) mit Aussparungen, die den Abmessungen des Kartenkörpers (4) entsprechen,
- Füllen von Vergußmasse (20) in die Aussparungen,
- Aushärten der Vergußmasse (20), und
- Entfernen der Schablone (19) von dem Filmträger (1).

15. Kartenförmiger Datenträger (10) zur Verwendung als Plug-In, umfassend
- einen Filmträger (1), an dessen Vorderseite ein Kontaktlayout (3) und an dessen Rückseite Kontaktierungsflächen angelegt sind,
- einen Halbleiterschaltkreis (5) auf der Rückseite des Filmträgers (1), dessen Kontakte mit den Kontaktierungsflächen verbunden sind, und
- einen Kartenkörper (4), der mit dem Filmträger (1) verbunden ist, wobei der Filmträger (1) und der Kartenkörper (4) dieselben Längen- und/oder Breitenabmessungen besitzen und zusammen die Dicke des Datenträgers festlegen,
**dadurch gekennzeichnet, dass**
der Filmträger (1) für sichtbare Strahlung transparent oder semi-transparent ist, so daß durch den Filmträger hindurch der Kartenkörper (4) sichtbar ist, und dass als Material für den Kartenkörper (4) ein Material gewählt wird, das zur Beschriftung mittels einer Laserstrahlung sensibilisiert ist, für welche der Filmträger (1) vorzugsweise transparent ist.

## Claims

1. A method for manufacturing a card-shaped data carrier (10), in particular for employment as a plug-in, having the steps of:
- making available a foil carrier (1) on the front side of which there is provided a contact layout (3) and on the back side of which there are provided contacting areas,
- provided that a semiconductor circuit is not yet present, arranging a semiconductor circuit (5) on the back side and connecting the contacts of the semiconductor circuit (5) with the contact areas,
- connecting a card body with the back side of the foil carrier (1), the length and width dimensions of said card body corresponding to the dimensions of the finished data carrier and the thickness dimension of said card body together with the thickness of the foil carrier (1) corresponding to the thickness of the finished data carrier, and
- detaching an area comprising at least one contact layout (3) from the foil carrier (1), said area having the length and/or width dimensions of the finished data carrier,
**characterized in that**
the foil carrier (1) is transparent or semitransparent to visible radiation, so that the card body (4) is visible through the foil carrier (1), wherein as material for the card body (4) a material is chosen that is sensitized for writing by means of a laser radiation for which the foil carrier (1) is preferably transparent.

2. The method according to claim 1, **characterized in that** the step of connecting the card body with the back side of the foil carrier (1) is effected before the step of detachment and comprises the application of a casting compound enclosing the semiconductor circuit (5) on the back side of the foil carrier (1) in such a fashion that the casting compound forms the card body (4).

3. The method according to claim 1, **characterized in that** the connecting of the card body with the back side of the foil carrier (1) is effected during or after the step of detachment from the foil carrier (1).

4. The method according to claim 1, comprising the further step of producing visible markings in the card body (4) by means of laser radiation through the foil carrier (1).

5. The method according to claim 4, comprising the further step of at least regionally applying a metal coating (12) at least on the back side of the foil carrier (1), provided that on the back side of the foil carrier (1) a metal coating is not yet present, and producing visible markings in the metal layer (12) by means of laser radiation through the foil carrier (1).

6. The method according to claim 4 or 5, comprising the step of individualizing and/or personalizing the data carrier (10) by producing the visible markings.

7. The method according to any of the claims 1 to 6, **characterized in that** as material for the card body (4) a material, in particular a casting compound, is chosen into which visually recognizable color pigments, glitter elements, luminescent substances or other optical security elements are mixed which are preferably visible through the foil carrier (1).

8. The method according to any of the claims 1 to 7, **characterized by** the further step of printing the card body (4) on its back side and/or on at least one of its side surfaces.

9. The method according to any of the claims 1 to 8, **characterized by** the further step of applying a label in a depression on the back side of the card body (4).

10. The method according to any of the claims 1 to 9, **characterized in that** the step of detachment from the foil carrier (1) is effected by means of a drawknife, laser beam or water jet or by punching.

11. The method according to any of the claims 1 to 9, **characterized in that** the foil carrier (1) is unwound from a roll and the detachment from the foil carrier is effected by means of a band knife (13) which is disposed on a drum (14) rotating in accordance with the unwinding speed of the foil carrier (1) and which has the length and width dimensions of the finished data carrier (10).

12. The method according to claim 11, **characterized in that** on both sides of the foil carrier (1) a band knife (13, 16) is present, which mutually cooperate during the step of detachment.

13. The method according to any of the claims 1 to 12, **characterized in that** the card body (4) is injection-molded onto the foil carrier (1).

14. The method according to any of the claims 1 to 10, **characterized in that** the foil carrier is made available in the form of a sheet, wherein the step of applying the casting compound comprises the following partial steps of:
- placing on the back side of the foil carrier (1) a stencil (19) having gaps that correspond to the dimensions of the card body (4),
- filling casting compound (20) into the gaps,
- curing the casting compound (20), and
- removing the stencil (19) from the foil carrier (1).

15. A card-shaped data carrier (10) for employment as a plug-in, comprising
- a foil carrier (1), on the front side of which there is provided a contact layout (3) and on the back side of which there are provided contacting areas,
- a semiconductor circuit (5) on the back side of the foil carrier (1), the contacts of which are connected to the contacting areas, and
- a card body (4) connected to the foil carrier (1), wherein the foil carrier (1) and the card body (4) have the same length and/or width dimensions and together determine the thickness of the data carrier,
**characterized in that**
the foil carrier (1) is transparent or semitransparent to visible radiation, so that the card body (4) is visible through the foil carrier, and that as material for the card body (4) a material is chosen which is sensitized for writing by means of a laser radiation for which the foil carrier (1) is preferably transparent.

## Revendications

1. Procédé de fabrication d'un support de données (10) en forme de carte, notamment pour utilisation en tant que plug-in, comprenant les étapes:
• mise à disposition d'un support de film (1) à la face recto duquel un layout de contact (3) et à la face verso duquel des surfaces de mise en contact sont aménagés,
• dans la mesure où il n'y a pas encore de circuit semi-conducteur, agencement d'un circuit semi-conducteur (5) sur la face verso et jonction des contacts du circuit semi-conducteur (5) avec les surfaces de contact,
• jonction d'un corps de carte dont les dimensions de longueur et de largeur correspondent aux dimensions du support de données fini et dont la dimension en épaisseur correspond, conjointement avec l'épaisseur du support de film (1), à l'épaisseur du support de données fini, avec la face verso du support de film (1), et
• découpage, à partir du support de film (1), d'une zone comprenant au moins un layout de contact (3) ayant des dimensions de longueur et/ou de largeur du support de données fini,
**caractérisé en ce que**
• le support de film (1) est, pour le rayonnement visible, transparent ou semi-transparent, de telle sorte que le corps de carte (4) est visible à travers le support de film (1), il étant sélectionné, en tant que matériau pour le corps de carte (4), un matériau qui est sensibilisé à l'écriture au moyen d'un rayonnement laser, pour lequel le support de film (1) est de préférence transparent.

2. Procédé selon la revendication 1, **caractérisé en ce que** l'étape de la jonction du corps de carte avec la face verso du support de film (1) a lieu avant l'étape du découpage et comprend de telle manière l'application, sur la face verso du support de film (1), d'une masse de scellement entourant le circuit semi-conducteur (5), que la masse de scellement constitue le corps de carte (4).

3. Procédé selon la revendication 1, **caractérisé en ce que** la jonction du corps de carte avec la face verso du support de film (1) a lieu pendant ou après l'étape du découpage à partir du support de film (1).

4. Procédé selon la revendication 1, comprenant l'étape supplémentaire de la génération de marquages visibles dans le corps de carte (4) au moyen de rayonnement laser à travers le support de film (1).

5. Procédé selon la revendication 4, comprenant l'étape supplémentaire de l'application au moins partielle d'un revêtement métallique (12) au moins sur la face verso du support de film (1) dans la mesure où, sur la face verso du support de film (1), il n'y a pas encore de revêtement métallique, et génération de marquages visibles dans la couche métallique (12) au moyen de rayonnement laser à travers le support de film (1).

6. Procédé selon la revendication 4 ou 5, comprenant l'étape de l'individualisation et/ou de la personnalisation du support de données (10) par la génération des marquages visibles.

7. Procédé selon une des revendications de 1 à 6, **caractérisé en ce que**, en tant que matériau pour le corps de carte (4), c'est un matériau, notamment un matériau de scellement, qui est sélectionné, dans lequel des pigments de couleur visuellement reconnaissables, des éléments étincelants, des substances luminescentes ou d'autres éléments de sécurité optiques sont mélangés, lesquels sont de préférence visibles à travers le support de film (1).

8. Procédé selon une des revendications de 1 à 7, **caractérisé par** l'étape supplémentaire de l'impression du corps de carte (4) sur sa face verso et/ou au moins sur une de ses faces latérales.

9. Procédé selon une des revendications de 1 à 8, **caractérisé par** l'étape supplémentaire de l'application d'un label dans un renfoncement sur la face verso du corps de carte (4).

10. Procédé selon une des revendications de 1 à 9, **caractérisé en ce que** l'étape du découpage, à partir du support de film (1), a lieu au moyen d'un couteau de tirage, d'un faisceau laser ou d'un jet d'eau ou par poinçonnage.

11. Procédé selon une des revendications de 1 à 9, **caractérisé en ce que** le support de film (1) est déroulé d'un rouleau et **en ce que** le découpage à partir du support de film a lieu au moyen d'un couteau à ruban (13) qui se trouve sur un tambour (14) qui tourne en fonction de la vitesse de déroulement du support de film (1) et qui possède les dimensions de longueur et de largeur du support de données (10) fini.

12. Procédé selon la revendication 11, **caractérisé en ce que**, des deux côtés du support de film (1), il y a un couteau à ruban (13, 16) qui coopèrent ensemble lors de l'étape du découpage.

13. Procédé selon une des revendications de 1 à 12, **caractérisé en ce que** le corps de carte (4) est moulé par injection sur le support de film (1).

14. Procédé selon une des revendications de 1 à 10, **caractérisé en ce que** le support de film est mis à disposition sous forme de feuille, l'étape de l'application de la masse de scellement comprenant les étapes partielles suivantes:
• pose, sur la face verso du support de film (1), d'un pochoir (19) ayant des évidements correspondant aux dimensions du corps de carte (4),
• remplissage des évidements avec de la masse de scellement (20),
• durcissage de la masse de scellement (20), et
• enlèvement du pochoir (19) du support de film (1).

15. Support de données (10) destiné à une utilisation en tant que plug-in, comprenant
• un support de film (1) à la face recto duquel un layout de contact (3) et à la face verso duquel des surfaces de mise en contact sont aménagés,
• un circuit semi-conducteur (5) sur la face verso du support de film (1), dont les contacts sont joints avec les surfaces de contacts, et
• un corps de carte (4) qui est joint avec le support de film (1), le support de film (1) et le corps de carte (4) possédant les mêmes dimensions de longueur et/ou de largeur et déterminant conjointement l'épaisseur du support de données,
**caractérisé en ce que**
le support de film (1) est, pour le rayonnement visible, transparent ou semi-transparent, de telle sorte que le corps de carte (4) est visible à travers le support de film, et **en ce que**, en tant que matériau pour le corps de carte (4), c'est un matériau sensibilisé à l'écriture au moyen d'un rayonnement laser, pour lequel le support de film (1) est de préférence transparent, qui est sélectionné.
